(19) Europäisches Patentamt
European Patent Office
Office européen des brevets

(11) EP 0 497 946 B1

(12) # EUROPÄISCHE PATENTSCHRIFT

(45) Veröffentlichungstag und Bekanntmachung des Hinweises auf die Patenterteilung:
**10.07.1996 Patentblatt 1996/28**

(21) Anmeldenummer: **91914682.9**

(22) Anmeldetag: **07.08.1991**

(51) Int Cl.[6]: **G01S 5/14**

(86) Internationale Anmeldenummer:
**PCT/EP91/01504**

(87) Internationale Veröffentlichungsnummer:
**WO 92/03747 (05.03.1992 Gazette 1992/06)**

(54) **VERFAHREN ZUR PRÄZISEN LAGEBESTIMMUNG**

HIGH PRECISION POSITIONING PROCESS

PROCEDE DE POSITIONNEMENT PRECIS

(84) Benannte Vertragsstaaten:
**CH DE FR GB LI SE**

(30) Priorität: **24.08.1990 DE 4026740**

(43) Veröffentlichungstag der Anmeldung:
**12.08.1992 Patentblatt 1992/33**

(73) Patentinhaber: **Leica AG**
**CH-9435 Heerbrugg (CH)**

(72) Erfinder: **FREI, Erwin**
**CH-9443 Windau (CH)**

(56) Entgegenhaltungen:
**WO-A-87/06410**

- **IEEE PLANS 1986, POSITION AND NAVIGATION SYMPOSIUM, November 1986, IEEE, New York, US; BEUTLER et al: "Using the Global Positioning System (GPS) for high precision Geodetic Surveys: Highlights and Problem Areas", SS. 243-250**
- **BULLETIN GEODESIQUE vol. 54, no. 2, 1980; BOSSLER et al.: "Using the Global Positioning System (GPS) for Geodetic Positioning", SS. 553-563**
- **LAND & MINERALS SURVEYING vol. 7, no. 10, October 1989; ASHKENAZI et al: "Rapid Static and Kinematic GPS Surveying: with or without Cycle Slips", SS. 489-494**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 497 946 B1

## Beschreibung

Die Erfindung betrifft ein Verfahren zur präzisen Lagebestimmung nach dem Oberbegriff des Anspruchs 1.

Ein solches ist aus Beutler, G., D. A. Davidson, R. Langley, R. Santerre, P. Vanicek, D. E. Wells (1984). "Some Theoretical and Practical Aspects of Geodetic Positioning using Carrier Phase Difference Observations of GPS Satellites." Mitteilungen der Satellitenbeobachtungsstation Zimmerwald, Nr. 14 und Department of Surveying Engineering Technical Report No. 109, University of New Brunswick, Fredericton Canada, S. 1 - 41, 78, 79 als relative statische Positionierung mit dem GPS Navstar Satelliten-Navigationssystem bekannt.

Einen Überblick über das GPS-System, die Meßgrößen, sowie die relative Positionierung gibt der Firmenprospekt "GPS-The Surveying System of the Future" Wild Heerbrugg Ltd. Heerbrugg, Schweiz, 1987.

Aus der EP-B 0 167 683 ist ein Navigationssystem nach dem Doppler-Verfahren für verschiedene installierte Funksatellitensysteme bekannt.

Bei den bekannten Verfahren der relativen statischen Positionierung sind zur Bestimmung der relativen Lage von zwei Punkten im Abstand von 10 km mit einer Genauigkeit im Bereich eines cm, wie in der Geodäsie gefordert, Meßzeiten von rund einer Stunde bei fünf verfügbaren Sendern erforderlich.

Ansätze zur Beschleunigung der Messung durch optimierte Auswerteverfahren sind von Frei, E., G. Beutler "Some Considerations Concerning an Adaptive, Optimized Technique to Resolve the Initial Phase Ambiguities" Proceedings of the Fifth International Geodetic Symposium on Satellite Positioning, 15. -17.03.1989, pp. 671-686, Las Cruces, New Mexico;
Remondi, B.W. "Performing Centimeter Level Surveys in Seconds with GPS Carrier Phase: Initial Results". Proceedings of the Fourth International Geodetic Symposium on Satellite Positioning,
18.04. - 02.05.86, pp. 1229-1249, Austin, Texas;
Beutler, G., W. Gurtner, M. Rothacher, U. Wild, E. Frei "Relative Static Positioning with the Global Positioning System: Basic Technical Considerations" Vortrag gehalten bei IAG General Meeting, Edinburgh, August 1989;

sowie V. Ashkenazi, P. I. Summerfield "Rapid static and kinematic GPS surveying; with or without cycle slips". Land and Minerals Surveying, Vol. 7, No. 10, 10/89, Seiten 489-494 (GB-Zeitschrift) bekannt. Der Inhalt der zitierten Literaturstellen ist Teil der Offenbarung dieser Anmeldung.

Das darin beschriebene quasi-kinematische Verfahren nach Remondi aa0. bringt Meßzeitersparnis nur bei einer Folge von Messungen zu verschiedenen Punkten und ist davon abhängig, daß ein Empfänger im ungestörten Funkkontakt zu den Sendern von Punkt zu Punkt transportiert werden kann. Diese Bedingung ist im allgemeinen aber schwer einzuhalten und schwer prüfbar. Ashkenazi und Summerfield aa0. lösen dieses Problem durch wiederholte Messung am ersten Meßpunkt. Das von Frei und Beutler angegebene Verfahren zur schnellen Auflösung der Phasenmehrdeutigkeit nutzt bei einem Verfahren nach dem Oberbegriff des Anspruchs 1 nur den a posteriori rms Fehler und prüft alle, innerhalb eines Intervalls von plus minus dreimal dem a postiori rms Fehler um die reellen Phasenmehrdeutigkeiten liegende, ganze alternative Phasenmehrdeutigkeiten auf die Größe des rms Fehlers des Positioniervektors.

Mit Meßzeiten von wenigen Minuten kommt dieses Verfahren daher nur aus, wenn 7 bis 8 Satelliten empfangen werden können oder von 5 bis 6 Satelliten Messungen auf zwei Frequenzen (L1 und L2) genutzt werden können.

Aus Beutler et al. ist auch bekannt, daß bei dem beschriebenen Verfahren eine Verbesserung durch wiederholte Messung in zeitlichem Abstand erreicht werden kann.

Es ist daher Aufgabe der Erfindung, ausgehend von einem gattungsgemäßen Verfahren zur präzisen Lagebestimmung, eine deutliche verkürzung der Meßzeit und/oder Verringerung der Zahl der empfangenen Sender und Frequenzen zu erreichen, wobei jede einzelne Position unabhängig von anderen oder von zusätzlichen Voraussetzungen bestimmt weden soll. Der Aufwand an Rechnerkapazität und Rechenzeit soll minimal sein. Bei Ausbildung der Sender und Empfänger entsprechend dem GPS-System sollen geodätische Positionsbestimmungen mit vier bis fünf empfangbaren Sendern und mit wenigen Minuten Meßzeit zuverlässig ermöglicht werden.

Die Lösung dieser Aufgabe gelingt bei einem gattungsgemäßen Verfahren zur präzisen Lagebestimmung durch Einführung der kennzeichnenden Merkmale des Anspruchs 1.

Gegenstand der Unteransprüche 2 bis 5 sind vorteilhafte Ausführungsformen und Weiterbildungen.

Das Verfahren findet Anwendung zur geodätischen Vermessung mit dem Satelliten-Positioniersystem GPS Navsat, aber auch mit anderen Funksatellitensystemen, bodengestützten Sendernetzen und den benutzten Wellenlängen angepaßt auch mit lichtemittierenden Sendern.

Die Technik der Vermessung und Navigation mit derartigen Systemen ist gekennzeichnet durch eine enge Verknüpfung von Radio- oder Licht- Sende- und Empfangstechnik, die technische und geometrische Auslegung von Sendernetzen und durch den Einsatz von umfangreichen Algorithmen und von Rechnern mit entsprechender Leistung zur Verarbeitung komplizierter Daten und Verknüpfungen, um die Positionierung, bzw. Längen- und Winkelmeßwerte, als Meßergebnis zu erzielen. Dabei beeinflussen sich alle beteiligten Elemente gegenseitig.

Beim Anmeldungsgegenstand wird ein Algorithmus zur Bestimmung der ganzzahligen Phasenmehrdeutigkeiten eingeführt, mit dem es möglich wird, die primäre Meßwerterfassung wesentlich gegenüber dem Stand der Technik zu

verbessern, nämlich die Meßzeit und die Zahl der erforderlichen Sender zu reduzieren, dies bei gleicher Genauigkeit und verbesserter Sicherheit der Positionsbestimmung.

In der aus der statischen Positionierung mit dein GPS-System bekannten (Beutler et al. 1984 aa0.) Weise sind bei dein Verfahren zur präzisen Lagebestimmung gemäß dem Ausführungsbeispiel vorgesehen:

a) ein erster Empfänger $R_1$ an einem Meßort $r_1$

b) ein zweiter Empfänger $R_2$ an einem Referenzort $r_2$.

Zu Bestimmen ist durch das Verfahren der Positionsvektor $x_c = r_1 - r_2$, dessen Betrag der Schrägentfernung von Meßort zum Referenzort entspricht.

Weiter ist in dem Beispiel vorgesehen:

c) Eine Anzahl von 4 bis 8 GPS-Satelliten-Sendern $S^n$, welche insbesondere Radiowellen der Bezeichnung L1 (19cm Wellenlänge) und/oder der Bezeichnung L2 (24cm Wiellenlänge) abstrahlen. Die gesendeten Radiowellen übertragen eine Identifizierung und eine Positions- und Synchronisations-Angabe der einzelnen Sender $S^n$ (vgl. Prospekt WILD Heerbrugg aa0.) mit Bezug zu einem geödätischen Koordinatensystem.

d) Jeder Empfänger $R_i$ kann für eine bestimmte Meßzeit, was jeweils als eine Epoche $E_K$ bezeichnet wird, einen eindeutig einem Sender $S^n$ zugeordneten Phasenmeßwert $\phi_i^n$ (k) bestimmen. Dabei gilt mit $|r_i^n|$ für die Distanz von Sender $S^n$ zu Empfänger $R_i$ und $\lambda_f$ für die Wellenlänge der L1- oder L2-Welle, welche empfangen wird, in genäherter Form die Beziehung

$$\phi_i^n (k) = (| r_i^n |/\lambda_f) - 2 \pi n_{if}^n (K) \qquad \text{(Gl.1)}$$

wobei $n_{if}^n(k)$ eine ganze Zahl ist, welche die Anzahl ganzer Wellenzyklen angibt, die bei der ersten Meßepoche zwischen Satelliten und Empfänger zu beobachten wäre. Dieser Wert wird als Phasenmehrdeutigkeit ($n_{if}^n(k)$) bezeichnet und kann jedoch nur durch geeignete Auswerteverfahren bestimmt werden und ist für die Einzelmessung unbekannt. Die Zahl j der Epochen $E_K$, für die der Phasenmeßwert $\phi_i^n(k)$ bestimmt wird, liegt zwischen etwa 2 und 10 innerhalb weniger Minuten beim hier dargestellten Verfahren, gegenüber rund 60 über einen Zeitraum von einer Stunde verteilten bei der bekannten statischen Positionierung.

e) Die Phasenmeßwerte $\phi_i^n(k)$ zusammen mit den weiteren von den Sendern übernommenen Daten werden bei den Empfängern $R_i$ gespeichert und einer automatischen Datenverarbeitungsanlage zugeführt, wobei bekannte Kommunikationsleitungen und/oder transportable Speichermittel wie Magnetspeicherdisketten Verwendung finden können.

Teile der im folgenden beschriebenen Verarbeitung können auch bei den einzelnen Empfängern $R_i$ erfolgen.

f) Aus den Phasenmeßwerten $\phi_i^n(k)$ wird deren doppelte Differenz

$$\Delta\phi_{12}^{nm}(k) = (\phi_2^n(k) - \phi_1^n(k)) - (\phi_2^m(k) - \phi_1^m(k)) - 2\pi N^{nm} \qquad \text{(Gl.2)}$$

gebildet. Dabei wird ein beliebiger Sender $S^n$ als Referenz ausgewählt und alle doppelten Differenzen werden bezüglich dieses Senders $S^n$ gebildet. Bei fünf empfangenen Sendern $S^1$ bis $S^5$ wird z.B. $S^1$ als Referenz genommen und die doppelten Differenzen

$$\Delta \phi_{12}^{12}, \Delta \phi_{12}^{13}, \Delta \phi_{12}^{14}, \Delta \phi_{12}^{15}$$

werden für alle j Epochen $E_K$, k = 1 bis j, gebildet.

Damit hat man ein mehrdimensionales Gleichungssystem, das nach Linearisierung und statistischer Auswertung nach der Methode der kleinsten Quadrate (vgl. Beutler et al. 1984, S. 14-19, Gl. (5), (6), S. 76-78, Gl. (7),(8)) eine Startlösung ergibt mit dem Lösungsvektor

$$\hat{x}_j = Q_{xxj} \cdot \sum_{k=1}^{j} (A_K^T P_K L_K) \qquad \text{(Gl.2) (fa))}$$

der korrespondierenden Kofaktorenmatrix

$$Q_{xxj} = \sum_{k=1}^{j} (A_K^T P_K A_K) \qquad \text{(Gl.3) (fb))}$$

dem a posteriori rms Fehler

(Gl.4) (fc))

$$m_{0j} = [(\sum_{K=1}^{j} (L_K^T P_K L_K)) - \hat{x}_j^T (Q_{xxj})^{-1} \hat{x}_j) \frac{1}{n-u}]^{1/2}$$

mit $A_K$ erste Designmatrix
$P_K$ Gewichtsmatrix der Messung } zur Epoche $E_K$
$L_K$ Beobachtungsvektor
$n$ Gesamtzahl der doppelten Differenzen $\Delta\phi_{12}^{km}$
$u$ Zahl der unbekannten Parameter .

Gemäß einer ersten Ausführungsform der Erfindung wird weiter wie folgt verfahren:

Der Startlösungsvektor $\hat{x}_j$ enthält die Startwerte $\hat{x}_{jC}$ für den Positionsvektor und reellwertige Phasenmehrdeutigkeiten $\hat{x}_{jN}$. Für letztere können ganzzahlige Alternativen in einer Umgebung angegeben werden. Zu jedem Satz ganzzahliger Alternativen $x_{jA}$ gehört eindeutig ein Positionsvektor $x_{jAC}$, welcher durch Einsetzen dieses Satzes ganzzahliger Alternativen $x_{jA}$ als bekannte Größen in die Bestimmungsgleichung (Gl.2) berechnet werden kann. Positionsvektor $x_{jAc}$ und Satz $x_{jA}$ ganzzahliger Alternativen bilden so eine konsistente Alternative $x_{jA}$ zum Startlösungsvektor $\hat{x}_j$.

In einem weiteren Schritt muß geprüft werden, ob eine solche Alternative $x_{jA}$ mit dem Startlösungsvektor $\hat{x}_j$ statistisch kompatibel ist.

Mit den Miitteln der statistischen Hypothesenprüfung wird dazu folgende Wahrscheinlichkeitsaussage gebildet: (Gl.6)

$$P\,[(x_{jA} - \hat{x}_j)^T\, Q_{xxj}^{-1}\, (x_{jA} - \hat{x}_j) \le u \cdot m_{0j}^{2} \cdot \xi_{Fu,f;1-\alpha}] = 1 - \alpha$$

Dabei ist $\xi_{Fu,f;1-\alpha}$ die Reichweite des einseitigen Vertrauensbereichs 1-$\alpha$ basierend auf Fischer's Wahrscheinlichkeitsdichtefunktion F mit den Freiheitsgraden u und n-u = f.

Danach ist eine Alternative $x_{jA}$ mit einer Fehlerwahrscheinlichkeit $\alpha$ statistisch kompatibel mit wenn $\hat{x}_j$ die Ungleichung Gl.6 erfüllt ist.

Damit ist der Vertrauensbereich ein u-dimensionales Hyperellipsoid, zentriert um $\hat{x}_j$, und jede in diesen Bereich fallende Alternative $x_{jA}$ ist mit dem Startlösungsvektor $\hat{x}_j$ kompatibel.

Es sind also alle diese Alternativen $x_{jA}$ zu bestimmen.

Mit allen diesen Alternativen $x_{jA}$ ist dann die aus der statischen Positionierung bekannte oder die für die zweite Ausführungsform näher beschriebene Bestimmung der Alternative $x_{sA}$ mit minimalen rms Fehler $m_{OS}$ als Lösung auszuführen.

Dieses Verfahren ist statistisch exakt und universell anwendbar, reduziert aber die Zahl der zu prüfenden Alternativen $x_{jA}$ noch nicht sehr deutlich (ein Hyper-Quader wird auf ein Hyper-Ellipsoid reduziert) und fordert damit immer noch relativ große Rechenleistung.

Mit der zweiten Ausführungsform der Erfindung wird die erforderliche Rechnerleistung drastisch reduziert:

Mit dem Startlösungsvektor $\hat{x}_j$, enthaltend den Positionsvektor $\hat{x}_{jc}$ und den Vektor $\hat{x}_{jN}$, mit den Komponenten $x_{Ni}$ als einzelnen reellwertigen Phasenmehrdeutigkeiten, der zugehörigen Kofaktorenmatrix $Q_{xxj}$ und dem a posteriori rms Fehler $m_{0j}$, wird ein linearer Vertrauensbereich für einzelne Phasenmehrdeutigkeiten $x_{Ni}$:

$$P_i\,(x_{Ni} - \xi_{Tf,1-\alpha/2}\, m_{xNi} \le x_{ANi} \le x_{Ni} + \xi_{Tf,1-\alpha/2}\, m_{xNi}) = 1-\alpha \qquad \text{(Gl.7)}$$

und einer für Differenzen $x_{NiK}$ zwischen einzelnen Phasenmehrdeutigkeiten $x_{Ni}$, $x_{NK}$:

$$P_i\,(x_{Nik} - \xi_{Tf,1-\alpha/2}\, m_{xNik} \le x_{AiK} \le x_{Nik} + \xi_{Tf,1-\alpha/2}\, m_{xNik}) = 1-\alpha \qquad \text{(Gl.8)}$$

gebildet.

Dabei gelten die Definitionen:

$$m_{xNi} = m_{0j} \cdot ([Q_{xxj}]_{ii})^{1/2}$$

$$x_{Nik} = x_{Ni} - x_{Nk}\ ;\ i,k = 1, ..., r\ ;\ f\ i = k$$

$$m_{xNik} = m_{0j} \cdot (q_{xNik})^{1/2}$$

$$q_{xNik} = [Q_{xxj}]_{hh}^{-2} \cdot [Q_{xxj}]_{ht} + [Q_{xxj}]_{tt};\ h=i+const.\ \ t=k+const.$$

$$x_{ANiK} = x_{ANi} - x_{ANK}$$

$\xi$ T(n-u), 1-$\alpha$/2 ist die einseitige Bandbreite des Vertrauensbereichs 1-$\alpha$ nach der Student'schen T-Verteilung.

Mit Gleichung Gl.7 wird für jede einzelne Phasenmehrdeutigkeit $x_{Ni}$ ein Vertrauensbereich festgelegt. Je weniger genau eine bestimmte Phasenmehrdeutigkeit $x_{Ni}$ durch die Startlösung bestimmt ist, um so mehr ganzzahlige Alternativen $x_{ANi}$ liegen im Vertrauensbereich. Alle möglichen Kombinationen dieser ganzzahligen Alternativen $x_{ANi}$ bilden die Menge der alternativen Phasenmehrdeutigkeitsvektoren $x_{hAN}$ mit $N_1$ Vektoren.

Die Zahl $N_1$ der Vektoren ist gegeben durch

$$N_1 = \prod_{i=1}^{r} (n_i)$$

Mit Hilfe von Gleichung 8 wird die Zahl der alternativen Phasenmehrdeutigkeitsvektoren $x_{hAN}$ für das weitere Vorgehen reduziert durch die Überprüfung auf ihre Verträglichkeit mit der statistischen Information der Kofaktorenmatrix $Q_{xxj}$.

Dazu wird eine systematische Ordnung der Phasenmehrdeutigkeitsvektoren $x_{hA}$ eingeführt, bevor Gl.8 angewendet wird.

Der erste Vektor $x_{1A}$ enthält zu jeder reellen Einzelkomponente $x_{Ni}$ des Startlösungsvektors $x_j$ die nächstliegende ganze Zahl als Komponente $X_{Ai}$.

Der zweite Vektor $x_{2A}$ ist gleich dem ersten mit Ausnahme der letzten Komponente $x_{Ar}$, die den zweitnächsten ganzzahligen Wert annimmt. Die folgenden Vektoren enthalten den dritt- und viertnächsten Wert usw. als letzte Komponente, bis alle ganzzahligen Werte gemäß Gl.7 für $X_{Ar}$ ausgenutzt sind.

Die nächste Gruppe der Vektoren beginnt mit dem zweitnächsten ganzzahligen Wert für $x_{A(r-1)}$ und den nächsten ganzzahligen Werten für alle anderen Komponenten. Wieder wird $x_{Ar}$, der Reihe nach geändert und so diese nächste Gruppe erzeugt.

Diese Prozedur wird wiederholt bis alle möglichen Kombinationen der ganzzahligen Alternativen $x_{Ai}$ gem. Gl.7 sortiert sind.

Die Prüfung nach Gl.8 wird mit der Differenz $x_{AN12}$ der ersten ($x_{A1}$) und zweiten ($x_{A2}$) Komponente des Vektors $x_{1AN}$ ausgeführt.

Wird Gl.8 nicht erfüllt, dann scheiden

$$N_2 = \prod_{i=3}^{r} (n_i)$$

Vektoren $X_{1A}$ bis $x_{N2A}$ aus, da diese bei der gewählten Reihung der Vektoren $x_{hA}$ alle zugleich Gl.8 nicht erfüllen.

Wird dagegen Gl.8 erfüllt, dann wird mit den Differenzen $x_{A13}$ und $x_{A23}$ des Vektors $x_{1A}$ die Gl.8 gebildet. Wenn mit einer dieser Differenzen Gl.8 nicht erfüllt ist, dann scheiden die nächsten

$$N_3 = \prod_{i=4}^{r} (n_i)$$

Vektoren aus.

Wenn beide Differenzen Gl.8 erfüllen, dann werden die Differenzen zur vierten, danach zur fünften usw. Komponente gebildet, bis zur letzten Komponente $x_{Ar}$ in $x_{1A}$.

Dieser Verfahrensschritt der Prüfung nach Gl.8 muß für alle Vektoren $x_{hA}$ durchgeführt werden, die nicht durch einen negativen Befund schon mit anderen ausgeschieden sind. Dabei wird jeweils die Indexnummer h des nächsten Vektors als Summe der Indexnummer h des letzten berücksichtigten plus der Zahl der ausscheidenden Vektoren bestimmt.

im Ergebnis liegt eine Auswahl von zu den Gleichungen Gl.7 und Gl.8 kompatiblen ganzzahligen Phasen-Vektoren $x_{aA}$, a = 1 ... v vor. v bezeichnet die Zahl der kompatiblen Vektoren.

Nur noch mit dieser auf rationelle Weise gewonnenen Auswahl von Vektoren $x_{aA}$ aus der Menge der Vektoren $x_{hA}$ sind die folgenden Verfahrensschritte auszuführen:

h) Für jeden Vektor $x_{aA}$ wird durch Einsetzen in die Bestimmungsgleichung Gl.4 der korrespondierende Ortsvektor $x_{aAc}$ (Lösungsvektor) und der rms Fehler $m_{0a}$ bestimmt.

i) der Vektor $x_{sA}$ mit dem minimalen rms Fehler $m_{0s}$ wird bestimmt.

1) Die statistische Vereinbarkeit dieser Lösung mit den gegebenen Voraussetzungen wird geprüft und zwar wie folgt:

1a) Der korrespondierende Ortsvektor $X_{sAc}$ wird auf statistische Kompatibilität mit dem Startwert $\hat{x}_{jc}$ geprüft.

1b) Die Vereinbarkeit des rms Fehlers $m_{0s}$ mit der a priori Varianz $\sigma_0$ wird mit der statistischen Hypothesenmethode des $\psi^2$-Tests nach Vanicek, P, Krakiswky, E., "Geodesy: The Concepts". Second Edition. North Holland 1986. ISBN 0-444-87777-0 untersucht.
Dazu ist die Nullhypothese: $H_0 : m_{0s}{}^2 = \sigma_0{}^2$
und die alternative Hypothese: $H_1 : m_{0s}{}^2 \neq \sigma_0{}^2$.
Dann sind $m_{0s}$ und $\sigma_0$ kompatibel, wenn gilt

$$\xi\psi 2_{f/f,\alpha/2} \leq \frac{m_{0s}{}^2}{\sigma_0{}^2} \leq \xi\psi 2_{f/f,1-\alpha/2} \qquad \text{(Gl.9)}$$

d. h. der Quotient $m_{0s}{}^2/\sigma_0{}^2$ liegt innerhalb der Grenzen des 1-$\alpha$ Vertrauensbereichs. $\psi^2{}_{f/f}$ ist die Wahrscheinlichkeitsdichte dafür bei f = n-u Freiheitsgraden.

1c) Auch die Signifikanz der Differenz von $m_{0s}$ zum zweitkleinsten rms Fehler $m_{0s}$ wird mit dem F-Test nach Vanicek, Krakiwsky aa0. geprüft. Dazu ist die Nullhypothese $H_0$: $m_{0s}{}^2 = m_{0s}{}'^2$ und die alternative Hypothese: $H_1$: $m_{0s}{}^2 \neq m_{0s}{}'^2$.
Es gelten $m_{0s}$ und $m_{0s}'$ als nicht signifikant unterschieden, wenn

$$m_{0s}{}^2/m_{0s}{}'^2 \leq \xi\, F\, b1,\, b2,\, 1-\alpha/2 \qquad \text{(Gl. 10)}$$

Dabei ist $\xi$ F b1, b2, 1-$\alpha$/2 die Grenze des 1-$\alpha$ Vertrauensbereichs nach der Fisher'schen Nahrscheinlichkeitsdichtefunktion F mit den Freiheitsgraden $b_1$ und $b_2$ für die Bestimmung von $m_{0s}$ und $m_{0s}'$.
Ist Gl. 10 wahr, dann kann mit den vorhandenen Daten die Bestimmung der ganzzahligen Phasenmehrdeutigkeiten $x_N$ nicht eindeutig erfolgen.
Das gleiche gilt, wenn (1a)) $x_{SAC}$ nicht mit $\hat{x}_{jc}$ kompatibel ist oder (1b)) Gl.9 nicht erfüllt ist. In allen diesen Fällen wird daher eine Fehlermeldung als Ergebnis der Auswertung ausgegeben.

m) Das Verfahren stellt damit sicher, daß keine Ergebnisse ausgegeben werden, welche mit den vorliegenden Meßdaten noch nicht statistisch eindeutig abgesichert werden können. Ein Eingreifen und Bewerten durch den Benutzer ist also nicht mehr erforderlich.

Das Verfahren ist soweit für die Verwendung einer einzelnen Frequenz (L1 oder L2) bzw. Wellenlänge ($\lambda_1$ oder $\lambda_2$) beschrieben. Ohne weiteres können aber die Messungen für zwei Frequenzen (L1 und L2) nebeneinander mit dem Verfahren ausgewertet werden und dabei einfach die Sender pro Frequenz einzeln betrachtet werden.

Es ist jedoch besonders vorteilhaft, die gegenseitige Koppelung der Messungen zwischen gleichen Sendern und Empfängern mit zwei Sendefrequenzen auszunutzen. Denn natürlich ist die Entfernung für beide Frequenzen identisch, abgesehen von Einflüssen der Signalausbreitung in der Atmosphäre.

Wenn die Komponenten $x_{Ni}$ und $x_{Nk}$ des Startlösungsvektors $\hat{x}_j$ zur gleichen Konstellation von Satelliten $S^n$ und Empfängern $R_j$, aber zu den L1 und L2 Frequenzen gehören, dann hat die Linearkombination

$$x_{Lik} = x_{Ni} - \frac{\lambda_2}{\lambda_1} \cdot x_{Nk}$$

nur einen sehr kleinen rms Fehler $m_{xLik}$.

Damit kann für die ganzzahligen Alternativen $x_{Ai}$ und $x_{Ak}$ und ihre Linearkombination

$$x_{ALik} = x_{Ai} - \frac{\lambda_2}{\lambda_1} \cdot x_{Ak}$$

ein zusätzliches äußerst strenges Kriterium aufgestellt werden: (Gl.11)

$$P_i\,(x_{Lik} - \xi_{Tf,1-\alpha/2}\, m_{xLik} \leq x_{ALik} \leq x_{Lik} + \xi_{Tf,1-\alpha/2}\, m_{xLik}) = 1-\alpha$$

Wann immer ein Paar ganzzahliger Alternativen $x_{Ai}$ und $x_{Ak}$ zum gleichen Sender $S^n$ und Empfänger $R_i$ mit verschiedenen Frequenzen L1 und L2 die Bedingung Gl.11 nicht erfüllt, dann sind alle Kombinationen $x_{hA}$ mit diesem Paar $x_{Ai}$ und $x_{Ak}$ von der weiteren Auswertung auszunehmen.

Gl.11 wird also parallel zu Gl.8 in dem Verfahren eingesetzt, wenn Messungen mit zwei Frequenzen (L1 und L2) vorliegen und bewirkt eine zusätzliche drastische Reduzierung der Zahl der ganzzahligen Alternativen $x_{aA}$.

Die Leistungsfähigkeit des Verfahrens wird mit den im folgenden beschriebenen Beispielen gezeigt.

Dazu werden Meßdaten verwendet, die bei der "Turtmann-Kampagne 89" mit WM 102 Empfängern auf den Positionen "TURT" und "ERGI" mit einer Schrägentfernung von 2km und einer Höhendifferenz von 500m am 07.07.89 mit den erreichbaren GPS-Satelliten Nr. 6,8,9,11,12 aufgenommen wurden und nach der Methode der relativen statischen Positionierung (Beutler et al. aaO.) ausgewertet vorliegen.

Diese Daten sind dokumentiert in Beutler G., "Exemplary Processing of a 1989 Campaign in the Swiss Alps". Astronomisches Institut der Universität Bern, 1989.

Für die Beispiele wurden Meßdaten nach Anzahl, zeitlicher Verteilung und Frequenz in unterschiedlicher Kombination entnommen. Als Referenz $x_{CT}$, $x_{NT}$ werden in den Beispielen die besten Daten aus o. g. Turtmann-Kampagne '89 angegeben.

Ein erstes Beispiel 1, das L1 und L2 Meßwerte für fünf Satelliten von sechs aufeinanderfolgenden Epochen zu je einer Minute Meßzeit auswertet und so bei einer fehlenden L2-Messung n = 47 doppelte Differenzen der Phasenmeßwerte $\Delta\phi_{12}^{nm}(k)$ nutzt, wird mit den Tabellen 1 bis 6 vorgestellt.

Tabelle 1 zeigt als Ergebnis der Startlösung die einzelnen Phasenmehrdeutigkeiten $x_{Ni}$ und ihre rms Fehler $m_{xNi}$. Zum Vergleich sind die "wahren" Phasenmehrdeutigkeiten $x_{NTi}$ als Ergebnis aus Beutler aa0. angegeben.

Tabelle 1

| i | Freq. | $S^m$ | $S^n$ | $x_{Ni}$ | $m_{xNi}$ | $x_{NTi}$ |
|---|---|---|---|---|---|---|
| 1 | L1 | 6 | 12 | - 9.07 | 0.78 | - 8 |
| 2 | L1 | 9 | 12 | - 2.74 | 0.31 | - 3 |
| 3 | L1 | 8 | 12 | -10.26 | 0.83 | - 9 |
| 4 | L1 | 11 | 12 | -17.53 | 0.44 | -18 |
| 5 | L2 | 6 | 12 | - 6.84 | 0.61 | - 6 |
| 6 | L2 | 9 | 12 | - 1.83 | 0.24 | - 2 |
| 7 | L2 | 8 | 12 | - 6.98 | 0.65 | - 6 |
| 8 | L2 | 11 | 12 | -13.69 | 0.34 | -14 |

Der a posteriori rms Fehler ist $m_{0j}$ = 3mm.

Die rms Fehler $m_{xNi}$ liegen im Bereich von 0,2 bis 0,8 Zyklen. Eine unmittelbare Festlegung auf die nächste ganze Zahl würde zu falschen Ergebnissen führen, wie der Vergleich mit den Werten $x_{NTi}$ zeigt.

Tabelle 2 zeigt für die Startlösung die Koordinaten des Meßorts ($r_1$) und den Abstand $|x_c|$ zwischen Referenz $R_2$ und Meßort $R_1$ im Vergleich mit den als "wahr" bekannten Werten $X_{CT}$ von Beutler et al aa0.. Die Abweichungen liegen im Bereich eines halben Meters.

Tabelle 2

| | $x_C$ [m] | $x_{CT}$ [m] | $\Delta x_C$ [m] |
|---|---|---|---|
| $r_x$ | 4375518.973 | 4375519.764 | 0.791 |
| $r_y$ | 593010.606 | 593010.699 | 0.093 |
| $r_z$ | 4588793.269 | 4588793.382 | 0.113 |
| $\lvert x_C \rvert$ | 2005.187 | 2005.675 | 0.488 |

Es ist daher zur Erreichung der geforderten meßgenauigkeit erforderlich, die ganzzahligen Phasenmehrdeutigkeiten $x_{aA}$ zu bestimmen. Dazu wird zunächst mit den $x_{Ni}$ und $m_{xNi}$ nach Gl.7 eine Menge der alternativen Phasenmehrdeutigkeitsvektoren $x_{hA}$ bestimmt.

Dabei ist für Gl.7 und Gl.8

$$\xi_{Tf,1-\alpha/2} = 3{,}6$$

mit f = 36 und $\alpha$ = 0,1 % festgelegt.

Die in Gl.8 einzusetzenden Differenzen $x_{Nik}$ zwischen Phasenmehrdeutigkeiten und die zugehörigen rms Fehler $m_{xNik}$ im Vergleich zu den "wahren" Differenzen $x_{NTik}$ zeigt Tabelle 3.

Tabelle 3:

| i | k | $x_{Nik}$ | $m_{xNik}$ | $x_{NTik}$ |
|---|---|---|---|---|
| 1 | 2 | - 6.33 | 0.52 | - 5 |
| 1 | 3 | 1.19 | 0.06 | 1 |
| 1 | 4 | 8.46 | 0.53 | 10 |
| 1 | 5 | - 2.24 | 0.17 | - 2 |
| 1 | 6 | - 7.24 | 0.58 | - 6 |
| 1 | 7 | - 2.10 | 0.13 | - 2 |
| 1 | 8 | 4.62 | 0.56 | 6 |
| 2 | 3 | 7.52 | 0.58 | 6 |
| 2 | 4 | 14.79 | 0.23 | 15 |
| 2 | 5 | 4.09 | 0.36 | 3 |
| 2 | 6 | - 0.92 | 0.07 | - 1 |
| 2 | 7 | 4.23 | 0.41 | 3 |
| 2 | 8 | 10.95 | 0.18 | 11 |
| 3 | 4 | 7.27 | 0.58 | 9 |
| 3 | 5 | - 3.43 | 0.23 | - 3 |
| 3 | 6 | - 8.43 | 0.63 | - 7 |
| 3 | 7 | - 3.28 | 0.18 | - 3 |
| 3 | 8 | - 3.43 | 0.62 | 5 |
| 4 | 5 | -10.69 | 0.39 | -12 |
| 4 | 6 | -15.70 | 0.26 | -16 |
| 4 | 7 | -10.55 | 0.43 | -12 |
| 4 | 8 | - 3.84 | 0.10 | - 4 |
| 5 | 6 | - 5.01 | 0.41 | - 4 |
| 5 | 7 | 0.14 | 0.05 | 0 |
| 5 | 8 | 6.86 | 0.41 | 8 |
| 6 | 7 | 5.15 | 0.45 | 4 |
| 6 | 8 | 11.86 | 0.18 | 12 |
| 7 | 8 | 6.71 | 0.45 | 8 |

Dabei sind $x_{N15}$, $x_{N26}$, $x_{N37}$ und $x_{N48}$ Differenzen zwischen identischen Satelliten (Sendern) und verschiedener Frequenz L1, L2.

Für diese kann zusätzlich der Test nach Gl.11 mit den Linearkombinationen $x_{Lik}$ und deren rms Fehler $m_{xLik}$ durchgeführt werden. Tabelle 4 zeigt die $x_{Lik}$ und $m_{xLik}$ im Vergleich zur "wahren" Linearkombination $x_{LTik}$.

Tabelle 4:

| L1 | L2 | $x_{Lik}$ | $m_{xLik}$ | $x_{LTik}$ |
|---|---|---|---|---|
| 1 | 5 | -0.30 | 0.01 | -0.30 |
| 2 | 6 | -0.40 | 0.01 | -0.43 |
| 3 | 7 | -1.31 | 0.01 | -1.30 |
| 4 | 8 | -0.05 | 0.01 | -0.03 |

Bei diesem Beispiel gibt es über 1800 alternative Phasenmehrdeutigkeitsvektoren $x_{hA}$, welche die Gl.7 erfüllen.

Nur noch zwei Vektoren $x_{aA}$ erfüllen jedoch die Gl.8.

Die Anwendung der Gl. 11 erübrigt sich also in diesem Beispiel.

Tabelle 5 zeigt den signifikanten Unterschied der rms Fehler $m_{0s}$ und $m_{0s}'$ zu den beiden Vektoren nach dem F-Test (Gl.10) :

Tabelle 5:

| $x_{aA}$ | $m_{0a}$ | $\frac{m_{01}^2}{m_{02}^2}$ | $\xi_{Ff,f,1-\alpha/2}$ ($\alpha$ = 5%) | Test |
|---|---|---|---|---|
| 1 | $m_{0s}$ = 4 | | | |
| 2 | $m_{0s'}$ = 14 | 12.2 | 1.8 | |

Der erste Vektor mit minimalem rms Fehler erfüllt auch die oben unter Ia) und Ib) beschriebenen Tests und ist also die Lösung $x_c$ des Problems bzw. das Meßergebnis, dargestellt in Tabelle 6 im Vergleich zur den "wahren" Werten nach Beutler et al. 1984, wie schon in Tabelle 2 für die Startlösung $\hat{x}_c$. Die Abweichungen liegen jetzt im Millimeterbereich.

Tabelle 6:

| | $x_c$ (m) | $x_{cT}$ (m) | $\Delta x_c$ (m) |
|---|---|---|---|
| $r_x$ | 4375519.764 | 4375519.764 | 0.000 |
| $r_y$ | 593010.699 | 593010.699 | 0.000 |
| $r_z$ | 4588793.361 | 4588793.382 | -0.021 |
| $\lvert x_c \rvert$ | 2005.682 | 2005.675 | 0.007 |

Im beispiel 2 wird nur eine Frequenz L1 benutzt, z.B. da nur einfachere Ein-Frequenz-Empfänger $R_1$, $R_2$ vorhanden sind. Wieder werden fünf Sende-Satelliten $S^n$ während 6 Epochen $E_K$ in 5 Minuten empfangen. Damit liegen n = 24 doppelte Differenzen $\Delta\phi_{12}^{nm}(k)$ der Phasenmeßwerte vor und werden verarbeitet.

Die Startlösung ist in Tabelle 7 dargestellt. Der a posteriori rms Fehler ist $m_{0j}$ = 3,2mm.

Tabelle 7:

| No. i | Freq. | $S_m$ | $S_n$ | $x_{Ni}$ | $m_{xni}$ | $x_{NTi}$ |
|---|---|---|---|---|---|---|
| 1 | L1 | 6 | 12 | - 8.71 | 1.15 | - 8 |
| 2 | L1 | 9 | 12 | - 2.69 | 0.47 | - 3 |
| 3 | L1 | 8 | 12 | - 9.86 | 1.22 | - 9 |
| 4 | L1 | 11 | 12 | -17.31 | 0.65 | -18 |

Für die Bestimmung der ganzzahligen Phasenmehrdeutigkeiten $x_{jA}$ ist $\xi_{Tf,1-\alpha/2}$ = 3,7, f = 17, $\alpha$ = 0,1% zur Festlegung der Vertrauensbereiche gesetzt.

Bei diesem Beispiel erfüllen 67 · $10^3$ verschiedene $x_{hA}$ die Gl.7, aber nur noch 1,6 $10^3$ $x_{aA}$ erfüllen Gl.8.

Für alle diese wird gemäß Verfahrensschritt h) der zugehörige alternative Positionsvektor $x_{aAc}$ und der rms Fehler $m_{0a}$ bestimmt.

Tabelle 8 zeigt den rms Fehler $m_{0a}$ für die fünf Vektoren $x_{aAN}$, a = 1 bis 5, mit den kleinsten $m_{0a}$.

Tabelle 8:

| $x_{aA}$ | $m_{0a}$ | $\frac{m_{01}^2}{m_{0a}^2}$ | $\xi_{Ff,f,1-\alpha/2}$ ($\alpha$ = 5%) | Test |
|---|---|---|---|---|
| a =1 | 3.0 | | | |
| 2 | 3.1 | 0.60 | 2.30 | + |
| 3 | 3.1 | 0.60 | 2.30 | + |
| 4 | 3.5 | 0.76 | 2.30 | + |
| 5 | 3.7 | 0.85 | 2.30 | + |

Alle $m_{0a}$ liegen aber im Vertrauensbereich des F-Tests (nach Gl.10), so daß $x_{1A}$ mit dem minimalen rms Fehler $m_{01}$ nicht als Lösung angegeben werden kann.

Mehr Meßdaten wären zur sicheren Bestimmung erforderlich. Es erfolgt dann eine Meldung, die nach zusätzlichen Meßdaten verlangt.

Beispiel 3 beschränkt sich ebenfalls auf eine Frequenz L1, nutzt davon aber zwei Blocks von je 6 Epochen zu einer Minute im zeitlichen Abstand von einer Stunde. Wiederum stehen 5 Sender zur Verfügung und damit n= 48 Doppeldifferenzen $\Delta\phi_{12}^{nm}$(k). Dabei wird im ersten Block der Sender 3 empfangen, der beim zweiten Block durch den Sender 13 ersetzt ist. Tabelle 9 gibt dafür wiederum die Startlösung.

Tabelle 9:

| i | Freq. | $S^m$ | $S_n$ | $x_{Ni}$ | $m_{xNi}$ | $x_{NTi}$ |
|---|---|---|---|---|---|---|
| 1 | L1 | 6 | 12 | - 8.02 | 0.88 | - 8 |
| 2 | L1 | 9 | 12 | - 2.69 | 0.40 | - 3 |
| 3 | L1 | 8 | 12 | - 9.06 | 0.93 | - 9 |
| 4 | L1 | 11 | 12 | -17.59 | 0.52 | -18 |
| 5 | L1 | 6 | 12 | - 6.86 | 0.36 | - 7 |
| 6 | L1 | 9 | 12 | - 2.49 | 0.84 | - 2 |
| 7 | L1 | 11 | 12 | -11.86 | 0.42 | -12 |
| 8 | L1 | 13 | 12 | -20.58 | 0.37 | -21 |

$m_{0j}$ = 3,2mm
Dabei sind: $\xi_{Tf,1-\alpha/2}$ = 3,6 , f = 3,7, $\alpha$ = 0,1% .

Nach Gl.7 gibt es damit 8 x $10^8$ Vektoren $x_{hA}$ , nach Anwendung von Gl.8 lediglich noch 1 x $10^4$ Vektoren $x_{aA}$.

Tabelle 10:

| $x_{aAN}$ | $m_{0a}$ | $\frac{m_{01}^2}{m_{0a}^2}$ | $\xi_{Ff,f,1-\alpha/2}$ ($\alpha$ = 5%) | Test |
|---|---|---|---|---|
| 1 | | | | |
| 2 | 8.7 | 2.10 | 1.80 | - |
| 3 | 11.5 | 3.67 | 1.80 | - |
| 4 | 11.6 | 3.74 | 1.80 | - |
| 5 | 12.1 | 4.07 | 1.80 | - |

Tabelle 10 zeigt für die fünf $x_{aA}$ mit den kleinsten rms Fehlern $m_{0a}$ nach dem $\psi^2$-Test (Gl.10) einen signifikanten Unterschied des minimalen rms Fehlers $m_{01}$.

Auch die Tests nach 1a) und 1b) besteht $m_{01}$ bzw. $x_{1A'}$,so daß das Ergebnis als Meßwert ausgegeben wird (Tabelle 11).

Tabelle 11:

| | $x_c$ [m] | $x_{cT}$ [m] | $\Delta x_c$ [m] |
|---|---|---|---|
| $r_x$ | 4375519.727 | 4375519.764 | -0.037 |
| $r_y$ | 593010.692 | 593010.699 | -0.007 |
| $r_z$ | 4588793.351 | 4588793.382 | -0.031 |
| $\lvert x_c \rvert$ | 2005.658 | 2005.675 | -0.017 |

Beispiel 4 nutzt unter sonst gleichen Bedingungen wie Beispiel 1 nur zwei Epochen $E_1$, $E_2$ in zwei Minutenn meßzeit.

Damit sind 16 Doppeldifferenzen $\Delta\ \phi_{12}^{nm}$ (k) gegeben.

Tabelle 12:

| i | Freq. | $S^m$ | $S^n$ | $x_{Ni}$ | $m_{xNi}$ | $x_{NTi}$ |
|---|---|---|---|---|---|---|
| 1 | L1 | 6 | 12 | - 5.05 | 2.83 | - 9 |
| 2 | L1 | 9 | 12 | - 1.40 | 1.13 | - 3 |
| 3 | L1 | 8 | 12 | - 4.92 | 3.02 | - 9 |
| 4 | L1 | 11 | 12 | -13.64 | 1.57 | -18 |

Tabelle 12: (continued)

| i | Freq. | $S^m$ | $S^n$ | $x_{Ni}$ | $m_{xNi}$ | $x_{NTi}$ |
|---|---|---|---|---|---|---|
| 5 | L2 | 6 | 12 | - 3.92 | 2.20 | - 7 |
| 6 | L2 | 9 | 12 | - 0.78 | 0.88 | - 2 |
| 7 | L2 | 8 | 12 | 2.82 | 2.36 | - 6 |
| 8 | L2 | 11 | 12 | -10.67 | 1.22 | -14 |

Tabelle 13:

| | $x_c$ [m] | $x_{cT}$ [m] | $\Delta x_c$ [m] |
|---|---|---|---|
| $r_x$ | 4375519.959 | 4375519.764 | 0.195 |
| $r_y$ | 593010.228 | 593010.699 | -0.471 |
| $r_z$ | 4588793.523 | 4588793.382 | 0.141 |
| $\lvert x_c \rvert$ | 2005.383 | 2005.675 | 0.292 |

Die Startlösung ist in Tabelle 12 dargestellt. Der a priori rms Fehler ist $m_{0j}$ = 2,0mm. Tabelle 13 gibt zusätzlich den Startwert im Vergleich zum "wahren" Positionsergebnis $x_{cT}$ an.

Die rms Fehler $m_{xNi}$ liegen bei 1 bis 3.

Das bedeutet, daß über $10^{11}$ verschiedene Vektoren $x_{hA}$ die Gl.7 erfüllen, wenn darin

$$\xi_{Tf,1-\alpha/2} = 6,9,\ f=5,\ \alpha=0,1\%\ \text{sind.}$$

Außer Gl.8 ist zur Beschränkung der Zahl der Alternativen hier auch Gl.11 anwendbar, da mit zwei Frequenzen L1 und L2 gemessen wurde.

Tabelle 14 zeigt die dafür nutzbaren Linearkombimationen $x_{Lik}$, deren rms Fehler $m_{xLik}$ und im Vergleich die "wahren" Kombinationen $x_{LikT}$.

Tabelle 14:

| i | k | $x_{Lik}$ | $m_{xLik}$ | $x_{LikT}$ |
|---|---|---|---|---|
| 1 | 5 | -0.02 | 0.01 | -0.02 |
| 2 | 6 | -0.40 | 0.01 | -0.43 |
| 3 | 7 | -1.30 | 0.01 | -1.30 |
| 4 | 8 | 0.05 | 0.01 | -0.03 |

Nach Anwendung der Auswahl nach den Gl.8 und Gl.11 bleiben nur noch 14 Vektoren $x_{aA}$ übrig, für die die zugehörigen $x_{aAc}$ und $m_{0a}$ zu bestimmen sind. Tabelle 15 zeigt diese für die fünf $x_{aA}$ mit den kleinsten $m_{0a}$. Der F-Test nach Gl.10 führt zu signifikanten Abweichungen der $m_{0a}$, a = 2 bis 5, von $m_{01}$.

Tabelle 15:

| $x_{aAN}$ | $m_{0a}$ | $\frac{m_{01}^2}{m_{0a}^2}$ | $\xi_{Ff,f,1-\alpha/2}$ ($\alpha$ = 5%) | Test |
|---|---|---|---|---|
| 1 | 4.0 | | | |
| 2 | 10.0 | 6.2 | 2.6 | - |
| 3 | 21.1 | 9.1 | 2.6 | - |
| 4 | 21.6 | 29.2 | 2.6 | - |
| 5 | 26.3 | 42.0 | 2.6 | - |

Auch die Tests nach Ia) und Ib) werden von dem Lösungsvektor $x_{1A}$ und von $m_{0a}$ bestanden, so daß das Ergebnis nach Tabelle 16 angezeigt wird.

Tabelle 16:

| | $x_c$ [m] | $x_{cT}$ [m] | $\Delta x_c$ [m] |
|---|---|---|---|
| $r_x$ | 4375519.760 | 4375519.764 | 0.004 |
| $r_y$ | 593010.700 | 593010.699 | -0.001 |
| $r_z$ | 4588793.363 | 4588793.382 | 0.019 |
| $\lvert x_c \rvert$ | 2005.679 | 2005.675 | -0.004 |

Mit den Beispielen ist gezeigt, wie das beschriebene Verfahren ohne Entscheidungen eines Bedieners zu eindeutigen Ergebnissen führt, und daß erheblich reduzierter Meßaufwand zu genauen Lagebestimmungen führt.

Formelzeichen

Phasenmessung

| | |
|---|---|
| $R_i$ | Empfänger Nr. i |
| $r_i$ | Ortsvektor von $R_i$ (Meßort, Referenzort) |
| $S^n$ | Sender Nr. n |
| $r_i^n$ | Sender (n) - Empfänger (i) - Distanzvektor |
| Lf | f = 1; 2 Trägerfrequenzen des GPS-Systems |
| $\lambda_f$ | Wellenlänge von Lf |
| $E_k$ | zeitliche Epoche Nr. k, k $\xi$ (1,...,j) |
| $\phi_i^n$ (k) | Phasenmeßwert zu $S^n$, $R_i$, $E_k$ |
| $n_{if}^n$ (k) | Phasenmehrdeutigkeit von $\phi_i^n$(k) zu Lf (additive ganze Zahl) |
| $\Delta\phi_{12}^{nm}$(k) | doppelte Differenz der Phasenmeßwerte zu $S^n$, $S^m$, $R_1$, $R_2$, $E_k$ |
| $L_k$ | Beobachtungsvektor zu $E_k$ |
| $P_k$ | Gewichtsmatrix zu $L_k$ |
| $A_k$ | erste Design-Matrix zu $E_k$ |

Lösung

| | |
|---|---|
| $x_{Index\ c}$ | Positionsvektor (gesuchte Größe und deren Näherungen), Dimension 3 |
| $x_{Index}$ N | Vektor der Phasenmehrdeutigkeiten , Dimension u |
| $x_{Index}$ | Lösungsvektor, x = ($x_c$, $x_N$) |
| $x_{Index}$ | Komponente von $x_{Index}$ |
| $Index_A$ | konsistente Alternative, alternative Phasenmehrdeutigkeit (Ersetzt Index N) |
| $Index_j$ | Lösung mit j Stück, $E_k$ |
| $Index_{i,k,n,a}$ | Laufindex der Alternativen |
| $\hat{x}_{Index}$, $\hat{x}_{Index}$ | Startlösung als Ergebnis einer Ausgleichsrechnung |
| $Q_{xxj}$ | korrespondierende Kofaktorenmatrix zu $\hat{x}_j$ (Gl.3) |

Statistik

| | |
|---|---|
| $m_{0Index}$ | a posteriori rms Fehler (Gl.4) |
| $\sigma_0$ | a priori Varianz der Startlösung ($\hat{x}$) |
| Index s | kleinster $m_0$ |
| Index s' | zweitkleinster $m_0$ |
| n | Zahl der doppelten Differenzen $\Delta\phi_{12}^{nm}$ (k) n = [(Zahl ($R_i$) · Zahl ($S^n$))-1]·j |
| u | Dimension von x = Zahl der unbekannten Parameter |
| f | f = n-u, Freiheitsgrad |

Statistik

| | |
|---|---|
| P [...] | Hypothese |
| 1-$\alpha$ | einseitiger Vertrauensbereich |
| $\xi$ | Reichweite |

F Fischer's Wahrscheinlichkeitsdichtefunktion
T Student'sche T-Verteilung

## Patentansprüche

**1.** Verfahren zur präzisen Lagebestimmung

a) eines ersten Empfängers ($R_1$)an einem Meßort ($r_1$) relativ zu
b) einem zweiten Empfänger ($R_2$) an einem Referenzort ($r_2$),
c) mit einer Anzahl von Sendern ($S^n$) für elektromagnetische Strahlung, welche von den Empfängern ($R_1$, $R_2$) empfangen wird, und deren Position untereinander und relativ zu den beiden Empfängern ($R_1$,$R_2$) zu jeder Zeit einer Messung mit einer gewissen Genauigkeit bekannt ist, wobei
d) zu einer Anzahl zeitlicher Epochen ($E_k$) jeder Empfänger ($R_1$,$R_2$) pro Sender ($S^n$) einen Phasenmeßwert ($\phi_i^n(k)$) erzeugt, welcher bis auf eine additive ganze Phasenmehrdeutigkeit ($n_{if}^n(k)$) den Quotienten aus der Sender-Empfänger-Distanz ($|r_i^n|$) und der Wellenlänge ($\lambda_f$) der elektromagnetischen Strahlung präzise bestimmt (Gl.1) und
e) für jede Epoche ($E_k$) die Phasenmeßwerte ( $\phi_i^n(k)$) (Gl.1) und die Position der Sender ($S^n$) gespeichert und einer automatischen Datenverarbeitungsanlage zugeführt werden, worin diese programmgesteuert verarbeitet werden, wobei
f) unter Bildung der doppelten Differenz ($\Delta\phi_{12}^{nm}(k)$) (Gl.2) der Phasenmeßwerte ($\phi_i^n(k)$) für jedes Paar von Sendern ($S^n$, $S^m$) mit den Mitteln der Ausgleichsrechnung eine Startlösung erzeugt wird,

fa) deren Lösungsvektor ($\hat{x}_j$) als Komponenten ($x_{ji}$) Näherungswerte für die 3 Komponenten des zu bestimmenden Positionsvektors ($\hat{x}_{jc}$) und reelle Näherungswerte aller Phasenmehrdeutigkeiten ($\hat{x}_{jN}$) enthält (Gl.3), und die zugleich
fb) die korrespondierende Kofaktorenmatrix ($Q_{xxj}$) (Gl.4) und den
fc) a posteriori rms Fehler ($m_{0j}$) (Gl.5) liefert;

g) wonach ganzzahlige alternative Phasenmehrdeutigkeiten ($x_{jAi}$) innerhalb eines durch den a posteriori rms Fehler ($m_0$) gekennzeichneten Intervalls um jede reelle Phäsenmehrdeutigkeit ($x_{jNi}$) gebildet werden und
h) verschiedene Kombinationen ($x_{jA}$) der alternativen Phasenmehrdeutigkeiten ($x_{jAi}$) als bekannte Größen zur Bestimmung alternativer positionsvektoren ($x_{jAc}$) und zugehöriger rms Fehler ($m_{0j}$) benutzt werden,
i) der alternative Positionsvektor ($X_{sAc}$) mit minimalem rms Fehler ($m_{0S}$) bestimmt wird;

**dadurch gekennzeichnet**, daß

j) die gebildeten Kombinationen ($x_{jA}$) der alternativen Phasenmehrdeutigkeiten ($x_{jAi}$) einem statistischen Auswahltest unterzogen werden, der die Korrelation der Phasenmehrdeutigkeiten ($x_{jAi}$), welche durch die korrespondierende Kofaktormatrix ($Q_{xxj}$) gekennzeichnet ist, und den a posteriori rms Fehler ($m_0$) berücksichtigt, und
k) nur die Kombinationen ($x_{jA}$) alternativer Phasenmehrdeutigkeiten ($x_{jAi}$), welche den Auswahltest bestanden haben, als bekannte Größen zur Bestimmung alternativer Positionsvektoren ($x_{jAc}$) und zugehöriger rms Fehler ($m_{0j}$) benutzt werden;
1) der minimale rms Fehler ($m_{0s}$) darauf geprüft wird, ob

la) der zugehörige alternative Positionsvektor ($X_{sAc}$) mit dem Positionsvektor ($\hat{x}_{jC}$) der Startlösung statistisch vereinbar ist und
lb) er mit der a priori Varianz ($\sigma_0$) der Startlösung statistisch vereinbar ist, und
lc) die Differenz zum zweitkleinsten rms Fehler ($m_{0s'}$) statistisch signifikant ist,

m) bei Vorliegen dieser Bedingungen für den minimalen rms Fehler ($m_{0s}$) der alternative Positionsvektor ($x_{sAC}$) mit dem minimalen rms Fehler ($m_{0s}$) als Meßwert der präzisen Lagebestimmung ausgegeben wird.

**2.** Verfahren nach Anspruch 1, **dadurch gekennzeichnet,** daß jeweils zwei Sender ($S^n$, $S^m$) verschiedener Frequenz (L1, L2) die gleiche Position einnehmen und die Empfänger ($R_1$, $R_2$) für die Signale verschiedener Frequenz (L1, L2) getrennte Phasenmeßwerte ($\phi_i^n(k)$)erzeugen,

**3.** Verfahren nach mindestens einem der Ansprüche 1 und 2, **dadurch gekennzeichnet,** daß der statistische Auswahltest für die Kombinationen ($x_{jA}$) der alternativen Phasenmehrdeutigkeiten nach der Bedingung (Gl.6)

$$P\,[(x_{jA} - \hat{x}_{jN})^T\, Q_{xxj}^{-1}\, (x_{jA} - \hat{x}_{jN}) < u.m_{0j}^{2}\cdot \xi Fu,f;1-\alpha = 1-\alpha$$

ausgeführt wird.

**4.** Verfahren nach mindestens einem der Ansprüche 1 und 2, **dadurch gekennzeichnet,** daß der statistische Auswahltest für die Kombinationen ($x_{jA}$) der alternativen Phasenmehrdeutigkeiten nach den Bedingungen

$$Pi\,(x_{Ni}-\xi_{Tf,1-\alpha/2}\cdot m_{xNi} \le x_{Ai} \le x_{Ni} + \xi_{Tf,1-\alpha/2}\cdot m_{xNi}) = 1-\alpha \qquad \text{(Gl. 7)}$$

$$P_i\,(x_{Nik}-\xi_{Tf,1-\alpha/2}\cdot m_{xNik} \le x_{Aik} \le x_{Nik}+\xi_{Tf,1-\alpha/2}\cdot n_{xNik}) = 1-\alpha \qquad \text{(Gl. 8)}$$

$$\xi\psi 2_{\,f/f,\alpha/2} \le \frac{m_{0s}^{2}}{\sigma_0^{2}} \le \xi\psi 2_{\,f/f,1-\alpha/2} \qquad \text{(Gl. 9)}$$

$$\frac{m_{0s}^{2}}{m_{0s'}^{2}} \le \xi_{Fb1,b2;1-\alpha/2} \qquad \text{(Gl. 10)}$$

ausgeführt wird.

**5.** Verfahren nach den Ansprüchen 2 und 4, **dadurch gekennzeichnet**, daß der statistische Auswahltest zusätzlich die Bedingung

$$P_i\,(x_{Lik}-\xi_{rf,1-\alpha/2}\, m_{xLik} \le x_{ALik} \le x_{Lik}+\xi_{rf,1-\alpha/2}\, m_{xLik}) = 1-\alpha \qquad \text{(Gl.11)}$$

umfaßt.

## Claims

**1.** Method for the precise ascertaining of the location

a) of a first receiver ($R_1$) at a measurement location ($r_1$) relative to
b) a second receiver ($R_2$) at a reference location ($r_2$)
c) with a number of transmitters ($S^n$) for electromagnetic radiation, which is received by the receivers ($R_1$, $R_2$), wherein the positions of the transmitters ($S^n$) one among the other and relative to both the receivers ($R_1$, R ) is known to a certain accuracy at the time of each measurement, wherein
d) each receiver ($R_1$, $R_2$) produces a phase measurement value ($\phi_i^n$ ($K_i$)), which except for an additive whole phase ambiguity ($n_{if}^n$ (k)) precisely determines the quotient of the transmitter-receiver distance ($|r_i^n|$) to the wavelength ($\lambda_f$) of the electromagnetic radiation (equation 1), for each transmitter ($S^n$) at a number of time periods ($E_k$) and
e) the phase measurement values ($\phi_i^n$ (k)) (equation 1) and the position of the transmitters ($S^n$) are stored for each time period ($E_k$) and fed to an automatic data processing system, in which these are processed under program control, wherein
f) with the formation of twice the difference ($\Delta\phi_{12}^{nm}$ (k)) (equation 2) of the phase measurement values ($\phi_i^n$(k)) for each pair of transmitters ($S^n$, $S^m$) by the mean values of the balancing calculation, a start solution is produced,

fa) the solution factor ($\hat{x}_j$) contains (equation 3) approximate values for the 3 components of the position vector ($\hat{x}_{jc}$) to be ascertained and real approximate values of all phase entry ambiguities ($\hat{x}_{jN}$) as components ($x_{ji}$) and which at the same time supplies
fb) the corresponding cofactor matrix ($Q_{xxj}$) (equation 4) and
fc) the a posteriori rms error ($m_{0j}$) (equation 5),

g) whereafter whole-numbered alternative phase ambiguities ($x_{jAi}$) are formed around each real phase ambiguity ($x_{jRi}$) within an interval characterised by the a posterieri rms error ($m_{0j}$),

h) different combinations ($x_{jA}$) of the alternative phase ambiguities ($x_{jAi}$) are utilised as known magnitudes for the determination of alternative position vectors ($x_{jAc}$) and associated rms errors ($m_{0j}$) and
i) the alternative position vector ($x_{sAc}$) with minimum rms error ($m_{0s}$) is ascertained,

characterised thereby, that

j) the formed combinations ($x_{jA}$) of the alternative phase ambiguities ($x_{jAi}$) are subjected to a statistical selection test which takes into consideration the correlation of the phase ambiguities ($x_{jAi}$), which is characterised by the corresponding cofactor matrix ($Q_{xxj}$), and the a posterieri rms error ($m_{0j}$) and
k) only those combinations ($x_{jA}$) of alternative phase ambiguities ($x_{jAi}$), which have stood the selection test, are used as known magnitudes for the determination of the alternative position vectors ($x_{jAc}$) and associated rms errors ($m_{0j}$),
l) the minimum rms error ($m_{0s}$) is checked for whether

la) the associated alternative postion vector ($x_{sAc}$) is statistically compatible with the position vector ($\hat{x}_{jc}$) of the start solution,
lb) it is statistically compatible with the a priori variance ($\sigma_0$) of the start solution and
lc) the difference from the second smallest rms error ($m_{0s'}$) is statistically significant, and

m) in the presence of these conditions for the minimum rms error ($m_{0s}$) the alternative position vector ($x_{sAc}$) with the minimum rms error ($m_{0s}$) is issued as measurement value of the precisely ascertained position.

**2.** Method according to claim 1, characterised thereby, that two transmitters ($S^n$, $S^m$) of different frequency (L1, L2) assume the same position each time and the receivers ($R_1$, $R_2$) produce separate phase measurement values ($\phi_i^n(k)$) for the signals of different frequency (L1, L2).

**3.** Method according to at least one of the claims 1 and 2, characterised thereby, that the statistical selection test for the combination ($x_{jA}$) of the alternative phase ambiguities is performed according to the condition (equation 6):

$$P\,[(x_{jA} - \hat{x}_{jN})^T\, Q_{xxj}^{-1}\,(x_{jA} - \hat{x}_{jN}) < u \cdot m_{0j}^{2} \cdot \xi_{Fu,f;1-\alpha}] = 1-\alpha$$

**4.** Method according to at least one of the claims 1 and 2, characterised thereby, that the statistical selection test for the combination ($x_{jA}$) of the alternative phase ambiguities is performed according to the conditions:

$$P_i\,(x_{Ni} - \xi_{Tf,1-\alpha/2} \cdot m_{xNi} \le x_{Ai} \le x_{Ni} + \xi_{Tf,1-\alpha/2} \cdot m_{xNi}) = 1-\alpha \qquad \text{(Equation 7)}$$

$$P_i\,(x_{Nik} - \xi_{Tf,1-\alpha/2} \cdot m_{xNik} \le x_{Aik} \le x_{Nik} + \xi_{Tf,1-\alpha/2} \cdot m_{xNik}) = 1-\alpha \qquad \text{(Equation 8)}$$

$$\xi\psi 2_{\ f/f,\alpha/2} \le \frac{m_{0s}^{2}}{\sigma_0^{2}} \le \xi\psi 2_{\ f/f,1-\alpha/2} \qquad \text{(Equation 9)}$$

$$\frac{m_{0s}^{2}}{m_{0s'}^{2}} \le \xi_{Fb1,b2;1-\alpha/2} \qquad \text{(Equation 10)}$$

**5.** Method according to claims 2 and 4, characterised thereby, that the statistical selection test additionally comprises the conditions:

$$P_i\,(x_{Lik} - \xi_{rf,1-\alpha/2}\, m_{xLik} \le x_{ALik} \le x_{Lik} + \xi_{rf,1-\alpha/2}\, m_{xLik}) = 1-\alpha \qquad \text{(Equation 11)}$$

## Revendications

**1.** Procédé pour la détermination de position précise

a) d'un premier récepteur ($R_1$) à un emplacement de mesure ($r_1$) par rapport à

b) un second récepteur ($R_2$) à un emplacement de référence ($r_2$),

c) avec un certain nombre d'émetteurs ($S^n$) pour le rayonnement électromagnétique qui est reçu par les récepteurs ($R_1$, $R_2$) et dont la position par rapport aux autres et par rapport aux deux récepteurs ($R_1$, $R_2$) est connue, à chaque instant de temps d'une mesure, avec une certains précision,

d) à un certain nombre d'époques dans le temps ($E_k$), chaque récepteur ($R_1$, $R_2$) par émetteur ($S^n$) produit une valeur de mesure de phase ($\phi_i^n(k)$) qui, à l'exception d'une ambiguïté de phase entière additive ($n^n{}_{if}(k)$) détermine le quotient à partir de la distance émetteur/récepteur ($|r_i^n|$) et la longueur d'onde ($\lambda_f$) du rayonnement électromagnétique, de façon précise (Gl.1) et

e) stocke pour chaque époque ($E_k$) les valeurs de mesure de phase ($\phi_i^n(k)$) (Gl.1) et la position de l'émetteur ($S^n$) et est acheminée à une installation de traitement de données automatique, où celles-ci sont traitées de façon commandée par un programme,

f) en formant la différence double ($\Delta\phi_{12}{}^{nm}(k)$) (Gl.2) ) les valeurs de mesure de phase ($\phi_i^n(k)$) pour chaque paire d'émetteurs ($S^n$, $S^m$) étant déterminée, à l'aide d'un calcul de compensation, une solution de départ,

fa) dont le vecteur de solution ($\hat{x}_j$) comprend comme composante ($x_{ji}$) des valeurs d'approximation pour les trois composantes du vecteur de position à déterminer ($\hat{x}_{jc}$) et des valeurs d'approximation réelles de toutes les ambiguïtés de phase ($\hat{x}_{jN}$) (Gl.3) et qui, simultanément, fournit

fb) la matrice des cofacteurs ($Q_{xxj}$) correspondante (Gl.4) et

fc) l'erreur a posteriori rms ($m_{Oj}$) (Gl.5) ;

g) après quoi des ambiguïtés de phase alternatives du nombre entier ($x_{jAi}$) à l'intérieur d'un intervalle caractérisées par l'erreur rms a posteriori ($m_O$), sont formées autour de chaque ambiguïté de phase réelle ($X_{jNi}$), et

h) différentes combinaisons ($x_{jA}$) des ambiguïtés de phase alternatives ($x_{a1}$) sont utilisées comme grandeurs connues pour la détermination de vecteurs de position alternatifs ($x_{jAc}$) et des erreurs rms ($m_{Oj}$) associées,

i) le vecteur de position alternatif ($X_{sAc}$) étant déterminé avec l'erreur rms ($m_{Os}$) minimale ;

caractérisé en ce que

j) les combinaisons ($x_{jA}$) formées des ambiguïtés de phase ($x_{jAi}$) alternatives sont soumises à un test de sélection statistique qui prend en compte la corrélation des ambiguïtés de phase ($x_{jA1}$) qui sont caractérisées par la matrice des cofacteurs ($Q_{xxj}$) correspondante et l'erreur rms ($m_O$) a posteriori, et

k) seulement les combinaisons ($x_{jA}$) des ambiguïtés de phase alternatives ($x_{jAi}$) qui ont réussi le test de sélection, sont utilisées comme grandeurs connues pour la détermination de vecteurs de position ($x_{jAc}$) alternatifs et des erreurs rms ($m_{Oj}$) associées ;

l) l'erreur rms ($m_{Os}$) minimale est examinée pour savoir si

1a) le vecteur de position alternative ($X_{sAc}$) associé est compatible statistiquement avec le vecteur de position ($\hat{x}_{jC}$) et

1b) celui-ci est statistiquement compatible avec la variante ($\sigma_0$) a priori de la solution de départ, et

1c) la différence est significative, statistiquement, par rapport à l'erreur rms ($m_{Os'}$) la deuxième plus petite,

m) lors de la présence de ces conditions pour l'erreur rms ($m_{Os}$) minimale, le vecteur de position alternative ($x_{sAC}$) est émise avec l'erreur rms ($m_{Os}$) minimale comme valeur de mesure de la détermination de position précise.

**2.** Procédé selon la revendication 1, caractérisé en ce que chaque fois deux émetteurs ($S^n$, $S^m$) de fréquences (L1, L2) différentes occupent la même position et les récepteurs ($R_1$, $R_2$) produisent des valeurs de mesure de phase ($\phi_i^n(k)$) séparées pour les signaux de fréquences différentes (L1, L2).

**3.** Procédé selon au moins une des revendications 1 et 2, caractérisé en ce que le test de sélection statistique pour la combinaison ($x_{JA}$) des ambiguïtés de phase alternatives est exécuté selon la condition Gl.6.

$$P[(x_{jA} - \hat{x}_{jN})^T Q_{xxj}^{-1} (x_{jA} - \hat{x}_{jN}) < u.m_{Oj}^2 \, \xi_{Fu,f;1-\alpha}] = 1 - \alpha$$

**4.** Procédé selon au moins une des revendications 1 et 2, caractérisé en ce que le test de sélection statistique pour la combinaison ($x_{jA}$) des ambiguïtés de phase alternatives est exécutée selon les conditions

$$P_i\,(x_{Ni} - \xi_{Tf,1-\alpha/2}\, m_{xNi} \leq x_{Ai} \leq x_{Ni} + \xi_{Tf,1-\alpha/2}\, m_{xNi}) = 1 - \alpha \qquad \text{(Gl. 7)}$$

$$P_i\ (x_{Nik}-\xi_{Tf,1-\alpha/2}\ m_{xNik} \leq x_{AiK} \leq x_{Nik} + \xi_{Tf,1-\alpha/2}\ m_{xNik}) = 1\alpha \qquad \text{(Gl. 8)}$$

$$\xi\psi 2_{f/f,\alpha/2} \leq \frac{m_{0s}^{\ 2}}{\sigma_0^{\ 2}}\ \xi\psi 2_{f/f,1-\alpha/2} \qquad \text{(Gl. 9)}$$

$$\frac{m_{Os}^{\ 2}}{m_{Os'}^{\ 2}} \leq \xi_{Fb1,b2\ ;\ 1-\alpha/2} \qquad \text{(Gl. 10)}$$

**5.** Procédé selon les revendications 2 et 4, caractérisé en ce que le test de sélection statistique comporte supplémentairement la condition

$$P_i(x_{Lik}-\ \xi_{\tau f,1-\alpha/2}\ m_{xLik} \leq x_{ALik} \leq x_{Lik} + \xi\tau_{f,1-\alpha/2}\ m_{xLik}) = 1-\alpha \qquad \text{(Gl. 11)}$$